(19) Europäisches Patentamt
European Patent Office
Office européen des brevets

(11) Veröffentlichungsnummer: **0 467 145 A1**

(12) **EUROPÄISCHE PATENTANMELDUNG**

(21) Anmeldenummer: **91110979.1**

(51) Int. Cl.[5]: **C07F 9/32**, C08K 5/5313

(22) Anmeldetag: **03.07.91**

(30) Priorität: **12.07.90 DE 4022215**

(43) Veröffentlichungstag der Anmeldung: **22.01.92 Patentblatt 92/04**

(84) Benannte Vertragsstaaten: **BE CH DE GB IT LI NL**

(71) Anmelder: **BASF Aktiengesellschaft**
**Carl-Bosch-Strasse 38**
**W-6700 Ludwigshafen(DE)**

(72) Erfinder: **Schuermann, Gregor, Dr.**
**Werderstrasse 40**
**W-6900 Heidelberg(DE)**

(54) **Neue Diphenylphosphinsäureester, deren Herstellung und Verwendung.**

(57) Diphenylphosphinsäureester der allgemeinen Formel I

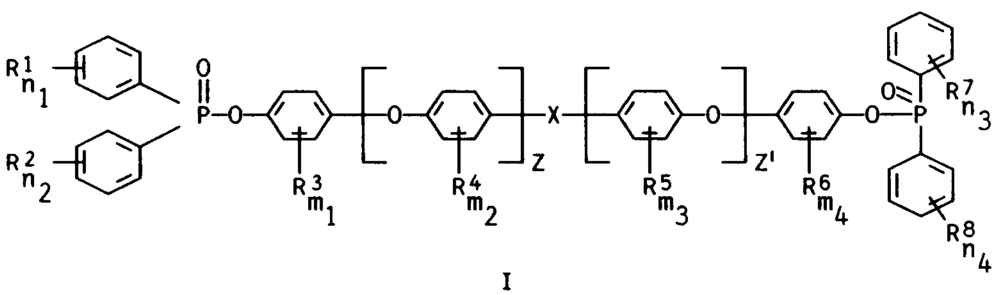

I

in der die Substituenten unabhängig voneinander folgende Bedeutung haben:

$R^1$ - $R^8$ gleiche oder verschiedene Substituenten der Art

a) Fluor, Chlor, Brom, Cyan, Hydroxy, Nitro, Amin

b) $C_1$-$C_6$-Alkyl, $C_2$-$C_6$-Alkenyl, $C_2$-$C_4$-Alkinyl, $C_1$-$C_6$-Alkoxy, $C_2$-$C_6$-Alkoxyalkyl, $C_3$-$C_6$-Cycloalkyl, wobei diese Reste ihrerseits Substituenten der Gruppe a tragen können

c) Phenyl, Phenoxy oder Benzyl, wobei diese Gruppen ihrerseits Substituenten der Gruppe a und b tragen können,

$n_1$ - $n_4$ eine ganze Zahl von 0 bis 5

$m_1$ - $m_4$ eine ganze Zahl von 0 bis 4

X -O-, -SO-, -$SO_2$-, -CO-, -NH-, -NR- (R = $C_1$-$C_3$-Alkyl), chem. Bindung, eine $C_1$-$C_{10}$-Alkylen- oder $C_2$-$C_{10}$-Alkenylengruppe, die unsubstituiert oder mit Substituenten der Art $R^1$ - $R^8$ substituiert sein können und

Z,Z' eine ganze Zahl von 0 bis 3.

EP 0 467 145 A1

Die vorliegende Erfindung betrifft Diphenylphosphinsäureester der allgemeinen Formel I

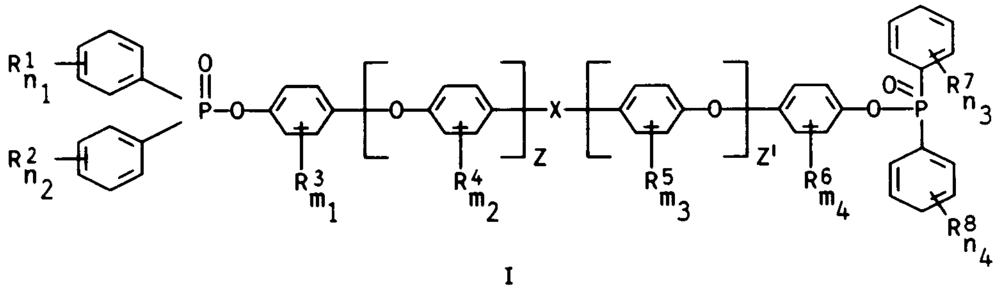

I

in der die Substituenten unabhängig voneinander folgende Bedeutung haben:

$R^1$ - $R^8$ gleiche oder verschiedene Substituenten der Art
- a) Fluor, Chlor, Brom, Cyan, Hydroxy, Nitro, Amin
- b) $C_1$-$C_6$-Alkyl, $C_2$-$C_6$-Alkenyl, $C_2$-$C_4$-Alkinyl, $C_1$-$C_6$-Alkoxy, $C_2$-$C_6$-Alkoxyalkyl, $C_3$-$C_6$-Cycloalkyl, wobei diese Reste ihrerseits Substituenten der Gruppe a tragen können
- c) Phenyl, Phenoxy oder Benzyl, wobei diese Gruppen ihrerseits Substituenten der Gruppe a und b tragen können,

$n_1$ - $n_4$ eine ganze Zahl von 0 bis 5

$m_1$ - $m_4$ eine ganze Zahl von 0 bis 4

X -O-, -SO-, -$SO_2$-, -CO-, -NH-, -NR- (R = $C_1$-$C_3$-Alkyl), chem. Bindung, eine $C_1$-$C_{10}$-Alkylen- oder $C_2$-$C_{10}$-Alkenylengruppe, die unsubstituiert oder mit Substituenten der Art $R^1$ - $R^8$ substituiert sein können und

Z,Z' eine ganze Zahl von 0 bis 3.

Außerdem betrifft die Erfindung ein Verfahren zur Herstellung der erfindungsgemäßen Diphenylphosphinsäureester sowie deren Verwendung als Stabilisatoren in Polymeren.

In der US-A 4 233 199 werden als Flammschutzmittel für Polyphenylenether/Polystyrol-Blends allgemein Phosphinsäure und Phosphinsäureester genannt, wobei allerdings keine detaillierten Angaben zu den Estern vorhanden sind.

In der DE-A 32 19 047 werden Derivate substituierter Phosphinsäure als Flammschutzmittel für Polyphenylenether/Polystyrol-Mischungen eingesetzt; Diphenylphosphinsäureester der allgemeinen Formel I sind nicht darunter.

Der vorliegenden Erfindung lag die Aufgabe zugrunde, neue Diphenylphosphinsäureesterzur Verfügung zu stellen, die sich insbesondere als Stabilisatoren für hochtemperaturbeständige Polymere eignen.

Erfindungsgemäß wird diese Aufgabe durch die eingangs definierten Diphenylphosphinsäureester der allgemeinen Formel I gemäß Anspruch 1 gelöst.

Von diesen werden die an den aromatischen Ringen unsubstituierten Verbindungen wegen ihrer leichteren Zugänglichkeit bevorzugt ($n_1$ - $n_4$ und $m_1$ - $m_4$ sind jeweils 0).

Bevorzugte Substituenten $R^1$ - $R^8$ sind solche der Gruppe a), $C_1$-$C_4$-Alkyl-gruppen, d.h. Methyl, Ethyl und n- bzw. i-Propyl sowie n-, i- und t-Butyl, $C_2$-$C_4$-Alkenylgruppen wie Ethenyl, Propenyl, Butenyl, $C_1$-$C_4$-Alkoxygruppen wie Methoxy, Ethoxy, Propoxy und tert.-Butoxy sowie $C_2$-$C_4$-Alkoxyalkylgruppen, insbesondere Methoxymethyl oder Methoxyethyl, $C_3$-$C_5$-Cycloalkylgruppen bevorzugt Cyclopropyl und Cyclopentyl sowie aus der Gruppe c) die unsubstituierten Phenyl-, Phenoxy- und Benzylgruppen.

Die Parameter $n_1$ - $n_4$ haben im Fall der an den aromatischen Ringen substituierten Verbindungen vorzugsweise einen Wert von 1 bis 3; gleiches gilt für die Parameter $m_1$ - $m_4$.

Der Substituent X ist vorzugsweise -O-, -SO-, -$SO_2$-, -CO- oder eine unsubstituierte bzw. mit einer $C_1$-$C_3$-Alkylgruppe substituierte Aminogruppe, eine $C_2$-$C_6$-Alkylengruppe (insbesondere -$C(CH_3)_2$-) oder eine chemische Bindung.

Die Parameter Z und Z' können Werte im Bereich von 0 - 3, vorzugsweise 0 oder 1 und insbesondere den Wert 0 annehmen.

Aus dem Vorstehenden ergeben sich die am meisten bevorzugten, an den aromatischen Ringen unsubstituierten Verbindungen wie folgt:

| Verbindung | X | Z | Z' |
|---|---|---|---|
| I1 | chem. Bdg. | 0 | 0 |
| I2 | -O- | 0 | 0 |
| I3 | $-SO_2-$ | 0 | 0 |
| I4 | -CO- | 0 | 0 |
| I5 | -SO- | 0 | 0 |
| I6 | $-C(CH_3)_2-$ | 0 | 0 |

Ganz allgemein werden darüber hinaus substituierte Verbindungen bevorzugt, in den die Reste $R^1$ und $R^7$ sowie $R^2$ und $R^8$ und die jeweils zugehörigen Parameter n, identisch sind. Derartige Verbindungen sind leichter zugänglich als unsymmetrische Verbindungen, da letztere in einem zweistufigen Verfahren herzustellen sind und zudem ein Produktgemisch anfällt, aus welchem die reinen Verbindungen ggf. zu isolieren sind (falls dies erforderlich ist).

Nach dem erfindungsgemäßen Verfahren erhält man erfindungsgemäße symmetrische Verbindungen der Formel I, in dem man ein Diphenylphosphinsäurehalogenid der allgemeinen Formel II

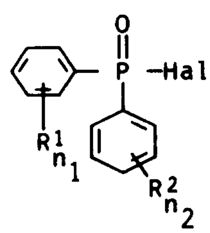

II

mit einer Dihydroxyverbindung der allgemeinen Formel III

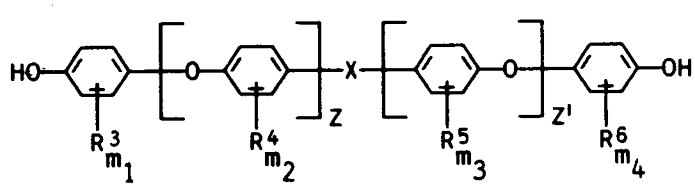

III

unter Entfernung des entstehenden Halogenwasserstoffs umsetzt. Die Reaktion von Dihydroxyverbindungen mit Diphenylphosphinsäurehalogeniden ist allgemein in Houben-Weyl, Meth. d. org. Chemie, Phosphorverbindungen, Tl. 1, 1963, S. 248 ff. beschrieben.

Die Umsetzung wird im allgemeinen bei Drucken von $10^2$ bis $10^5$ Pa, insbesondere $10^2$ bis 50.000 Pa durchgeführt. Wird die Umsetzung bei Drucken unter $10^5$ Pa (1 bar) vorgenommen, so kann auf den Zusatz eines den freiwerdenden Halogenwasserstoff bindenden Mittels prinzipiell verzichtet werden, da der gasförmige Halogenwasserstoff durch den Unterdruck entfernt wird.

Bevorzugt arbeitet man jedoch bei Normaldruck ($10^5$ Pa oder 1 bar) und setzt zur Bindung des Halogenwasserstoffs ein tertiäres Amin wie Triethylamin, Bis-(cyclohexyl)methylamin, Diethylanilin oder Pyridin ein.

Diese säurebindenden Mittel werden im allgemeinen im molaren Verhältnis 1 : 1 bis 5 : 1, vorzugsweise 1,2 : 1 bis 3 : 1, bezogen auf die molare Menge an eingesetztem Diphenylphosphinsäurechlorid, verwendet. Das Molverhältnis von Diphenylphosphinsäurechlorid zu Dihydroxyverbindung liegt im allgemeinen im Bereich von 2 : 1 bis 10 : 1, vorzugsweise 2 : 1 bis 6 : 1 und insbesondere 2 : 1 bis 4 : 1. Die Reaktionstemperatur ist an sich nicht besonders kritisch, vorzugsweise wird die Umsetzung jedoch bei Temperaturen im Bereich von -10 bis +30 °C, vorzugsweise von 0 bis 25 °C durchgeführt.

Obwohl die Reaktion prinzipiell auch in Substanz durchführbar ist, wird im allgemeinen in einem Lösungsmittel umgesetzt. Bevorzugte Lösungsmittel sind Toluol, chlorierte Kohlenwasserstoffe, insbesondere Dichlormethan und Chlorbenzol und Ether, insbesondere Diethylether, Methyl-tert.-Butylether und Tetrahydrofuran. In diesen Lösungsmitteln sind die erfindungsgemäßen Diphenylphosphinsäureester in der Regel unlöslich und können nach der Reaktion abfiltriert und ggf. durch Umkristallisation gereinigt werden. Die Reaktionszeit beträgt in der Regel 0,5 bis 12, vorzugsweise 1 bis 8 und insbesondere 2 bis 7 h.

Die Diphenylphosphinsäurehalogenide der Formel II und die Dihydroxyverbindungen der Formel III sind dem Fachmann an sich bekannt und in der Literatur beschrieben.

Bevorzugtes Diphenylphosphinsäurehalogenid ist Diphenylphosphinsäurechlorid und bevorzugte Dihydroxyverbindungen sind 4,4'-Dihydroxydiphenyl, 4,4'-Dihydroxydiphenylether, 4,4'-Dihydroxydiphenylsulfon, 4,4'-Dihydroxydiphenylsulfoxid, 4,4'-Dihydroxybenzophenon und 2,2-Di-(4-hydroxyphenyl)-propan (als Bisphenol A bezeichnet).

Die Herstellung von unsymmetrischen Verbindungen (d.h. $R^1 \neq R^7$ oder $R^2 \neq R^8$) kann nach einem analogen Verfahren erfolgen, wobei entweder eine Mischung der entsprechenden Diphenylphosphinsäurehalogenide eingesetzt wird (dabei entsteht ein Produktgemisch, das chromatographisch oder destillativ aufzuarbeiten ist) oder nach einem zweistufigen Verfahren, wobei zunächst eine OH-Gruppe der Dihydroxyverbindung mit dem ersten Diphenylphosphinsäurehalogenid umgesetzt und anschließend das zweite Diphenylphosphinsäurehalogenid zugegeben wird. Auch in diesem Fall entsteht in der Regel ein Produktgemisch, welches destillativ oder chromatographisch aufgetrennt werden kann.

Die erfindungsgemäßen Diphenylphosphinsäureester können insbesondere als Stabilisatoren in hochtemperaturbeständigen Polymeren, vorzugsweise in Polyarylethersulfonen und Polyaryletherketonen eingesetzt werden. Bei dieser Anwendung zeigen sie bei geringer Migrationstendenz eine gute Stabilisierung gegen Vernetzung, Kettenabbau und Oxidation.

Beispiele 1 bis 5

Eine Mischung von 0,2 mol Dihydroxyverbindung gemäß der Tabelle und 0,4 mol Triethylamin wurden unter Rühren in 400 ml Dichlormethan gelöst und auf 5 °C abgekühlt und tropfenweise während einer Dauer von 2 Stunden mit 0,4 mol Diphenylphosphinsäurechlorid versetzt. Nach 4-stündigem Rühren bei 20 °C wurde das ausgefallene Produkt in an sich üblicher Weise durch Abfiltrieren und Reinigung durch Umkristallisation erhalten. Die Ergebnisse der Versuche sind der nachstehenden Tabelle zu entnehmen.

| Beispiel | Dihydroxyverbindung | Ausbeute (% der Th.) |
|---|---|---|
| 1 | 4,4'-Dihydroxydiphenyl | 87 |
| 2 | 4,4'-Dihydroxybenzophenon | 86 |
| 3 | 4,4'-Dihydroxydiphenylether | 91 |
| 4 | 2,2-Di-(4-hydroxyphenyl)propan | 93 |
| 5 | 4,4'-Dihydroxydiphenylsulfon | 82 |

## Patentansprüche

**1.** Diphenylphosphinsäureester der allgemeinen Formel I

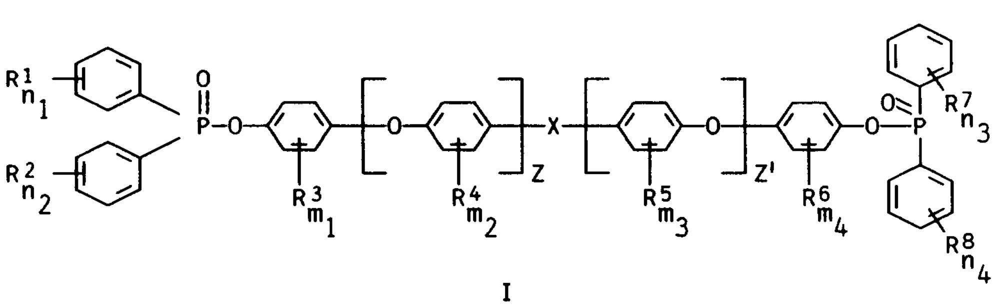

I

in der die Substituenten unabhängig voneinander folgende Bedeutung haben:

$R^1$ - $R^8$ gleiche oder verschiedene Substituenten der Art

a) Fluor, Chlor, Brom, Cyan, Hydroxy, Nitro, Amin

b) $C_1$-$C_6$-Alkyl, $C_2$-$C_6$-Alkenyl, $6_2$-$C_4$-Alkinyl, $C_1$-$C_6$-Alkoxy, $C_2$-$C_6$-Alkoxyalkyl, $C_3$-

$C_6$-Cycloalkyl, wobei diese Reste ihrerseits Substituenten der Gruppe a tragen können

c) Phenyl, Phenoxy oder Benzyl, wobei diese Gruppen ihrerseits Substituenten der Gruppe a und b tragen können,

| | |
|---|---|
| $n_1$ - $n_4$ | eine ganze Zahl von 0 bis 5 |
| $m_1$ - $m_4$ | eine ganze Zahl von 0 bis 4 |
| X | -O-, -SO-, -$SO_2$-, -CO-, -NH-, -NR- (R = $C_1$-$C_3$-Alkyl), chem. Bindung, eine $C_1$-$C_{10}$-Alkylen- oder $C_2$-$C_{10}$-Alkenylengruppe, die unsubstituiert oder mit Substituenten der Art $R^1$ - $R^8$ substituiert sein können und |
| Z,Z' | eine ganze Zahl von 0 bis 3. |

**2.** Verfahren zur Herstellung von symmetrischen Diphenylphosphinsäureestern der Formel I, dadurch gekennzeichnet, daß man ein Diphenylphosphinsäurehalogenid der allgemeinen Formel II

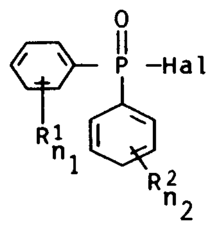

II

mit einer Dihydroxyverbindung der allgemeinen Formel III

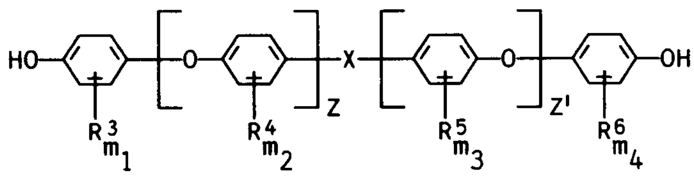

III

wobei $R^1$ - $R^6$, X, $n_1$, $n_2$, $m_1$ - $m_4$ und Z, Z' die in Anspruch 1 genannte Bedeutung haben und Hal für Cl, F, Br steht, unter Entfernung des entstehenden Halogenwasserstoffs umsetzt.

**3.** Verfahren nach Anspruch 2, dadurch gekennzeichnet, daß man als Dihydroxyverbindungen der Formel III Verbindungen verwendet, in denen X für eine Sulfo- oder Carboxygruppe oder eine chemische Bindung steht und Z und Z' den Wert 0 haben.

**4.** Verwendung der Diphenylphosphinsäureester I gemäß Anspruch 1 als Stabilisatoren für hochtemperaturbeständige Polymere.

Europäisches
Patentamt

# EUROPÄISCHER RECHERCHENBERICHT

Nummer der Anmeldung

**EP 91 11 0979**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| P,X | EP-A-0 413 167 (BAYER)<br>* Anspruch 2; Formel II * | 1 | C 07 F 9/32<br>C 08 K 5/5313 |
| A | EP-A-0 095 100 (BASF)<br>* Seite 7; Anspruch *; & DE - A - 3219047 (Kat. D,A) | 1,4 | |
| A | DE-A-2 224 994 (CIBA-GEIGY)<br>* Ansprüche 1,21 * | 1,4 | |
| A | CHEMICAL ABSTRACTS Band 106, Nr. 12, 23. März 1987, Zusammenfassung Nr. 85899e, Columbus, Ohio, US; & JP - A - 61143465 (SUMITOMO BAKELITE CO. LTD.) 01.07.1986 | 1,4 | |

RECHERCHIERTE SACHGEBIETE (Int. Cl.5)

C 07 F 9/32
C 08 K 5/5313

Der vorliegende Recherchenbericht wurde für alle Patentansprüche erstellt

| Recherchenort | Abschlußdatum der Recherche | Prüfer |
|---|---|---|
| Berlin | 23 Oktober 91 | KAPTEYN H G |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument